# FASCICULE DE BREVET EUROPEEN

(11) **EP 1 451 003 B1**
(45) Date de publication et mention de la délivrance du brevet: **19.04.2006**
(21) Numéro de dépôt: 02790503.3
(22) Date de dépôt: 11.10.2002
(51) Int. Cl.: B29C 70/72, B29C 70/84, B29C 70/74, B29C 45/14

(54) **PROCEDE DE PRECONDITIONNEMENT D'OUTILS A MAIN**
VERFAHREN ZUM ABPACKEN VON HANDWERKZEUGEN
METHOD FOR PREPACKAGING HAND TOOLS

(30) Priorité: 12.10.2001 FR 0113147
(43) Date de publication de la demande: 01.09.2004
(73) Titulaire: De La Fortelle, Xavier, 31400 Toulouse (FR)
(72) Inventeur: De La Fortelle, Xavier, 31400 Toulouse (FR)
(74) Mandataire: Schmitt, John
(86) Numéro de dépôt international: PCT/FR2002/003463
(87) Numéro de publication internationale: WO 2003/043803

(56) Documents cités:
- EP-A- 0 285 717
- DE-A- 3 320 572
- GB-A- 1 327 222
- US-A- 5 461 765
- US-B1- 6 241 208

## Description

L'invention, conformément à la revendication 1, concerne un procédé de préconditionnement d'outils métalliques à main comportant un manche en matière thermoplastique surmoulé.

Les outils traditionnels tels que, par exemple, les diverses catégories de tournevis, de limes, de râpes et de ciseaux à bois, sont constituées d'un élément métallique comportant une première partie active de l'outil allongée, parallèlement à un axe principal, susceptible de s'inscrire dans une surface cylindrique dont les génératrices sont parallèles audit axe principal et une deuxième partie de liaison avec un manche de manoeuvre, allongée suivant ledit axe principal, présentant des éléments d'ancrage, le manche de manoeuvre étant aussi sensiblement cylindrique autour du même axe principal. Ce manche de manoeuvre est actuellement réalisé par surmoulage d'au moins une matière thermoplastique autour de la deuxième partie de liaison. Lorsqu'il y a plusieurs matières employées, une première matière thermoplastique rigide assure la tenue mécanique du manche autour de la deuxième partie de liaison et au moins une deuxième matière thermoplastique souple ou rigide, injectée par-dessus la première matière thermoplastique rigide, assure l'habillage du manche pour le rendre soit plus agréable au toucher et/ou plus esthétique en jouant sur la couleur et/ou la forme. Les documents EP-A-0 285 717 et US-B1-6241 208 illustrent ces techniques de conditionnement d'outils.

La commercialisation de ces outils dans la grande distribution exige qu'ils soient placés dans un conteneur d'une dimension suffisante et difficile à ouvrir sans un outillage approprié pour en rendre plus difficile leur dissimulation au niveau des caisses : ces conteneurs sont par exemple constitués d'un support semi-rigide de préférence en matière plastique sur lequel est soudée une coque thermoplastique semi-rigide enfermant l'outil dans une cavité. Ce conteneur sert généralement de support aux informations indispensables à la commercialisation notamment le code à barres.

Le conditionnement des outils dans les conteneurs de commercialisation exige une reprise et des outillages spécifiques à cette activité ; la technique employée étant très différente de celle de fabrication des manches en matière thermoplastique, c'est généralement une activité sous-traitée à des sociétés spécialisées engendrant un surcoût pouvant être du même ordre de grandeur que le coût de fabrication de l'outil métallique à main commercialisé.

L'objet du procédé consiste à proposer un mode de conditionnement des outils métalliques à main à manche surmoulé ne nécessitant pas de reprise dans un but de réduction des coûts de production.

La description ci-après de l'invention se réfère aux dessins annexés sur lesquels:
La figure 1 représente une vue perspective d'un ensemble de commercialisation obtenu selon le procédé.
La figure 2 représente une vue perspective partielle d'un demi moule de mise en oeuvre du procédé selon une version préférée de l'invention.
La figure 3 représente une vue perspective partielle d'un demi moule de mise en oeuvre du procédé selon une autre version de l'invention.
La figure 4 représente une coupe d'un détail d'un ensemble de commercialisation obtenu suivant la version du procédé de la figure 3.
La figure 5 représente une coupe d'un perfectionnement de l'ensemble de commercialisation.
La figure 6 représente une vue perspective partielle d'un demi moule de mise en oeuvre du procédé selon une variante de la version de l'invention de la figure 3.
La figure 7 représente une coupe d'un détail d'un ensemble de commercialisation obtenu suivant la variante de la figure 6.

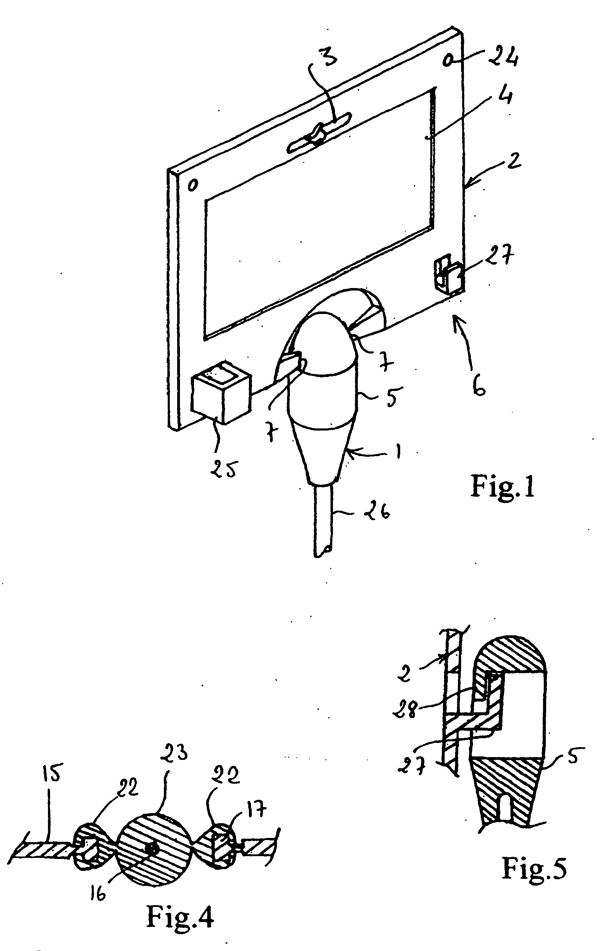

L'invention, selon la revendication 1, est un procédé permettant d'obtenir un ensemble de présentation 6 (fig.1) constitué d'au moins un outil à main 1, solidaire d'un plateau présentoir 2, par surmoulage d'un manche de manoeuvre 5 avec une matière thermoplastique : le plateau présentoir comportant notamment des équipements nécessaires à sa présentation dans les rayons des principaux circuits de distribution, l'outil à main 1 étant susceptible d'être séparé du plateau présentoir 2 par découpe de la matière thermoplastique constituant le manche de manoeuvre 5. Ainsi le plateau présentoir 2 comporte au moins un oeilleton 3 de forme appropriée pour s'enfiler dans au moins une tige simple ou double accrochée sur la face verticale d'une console de magasin de distribution et au moins une surface plane 4 susceptible de recevoir, par exemple, au moins une étiquette autocollante comportant un code à barres ; le plateau présentoir 2.est relié au manche de manoeuvre 5, par exemple, par deux points d'attache 7 situés dans le plan de joint du manche de manoeuvre 5.

La fabrication de l'ensemble de présentation 6 constitué d'au moins un manche de manoeuvre 5 surmoulé d'un outil à main 1 et d'un plateau présentoir 2 est dans une version préférée de l'invention réalisé dans la ou l'une des matières thermoplastiques servant à surmouler le manche de manoeuvre 5 ; l'empreinte du plateau présentoir 8 (fig.2) a le même plan de joint 9 que l'empreinte du manche de manoeuvre 10 surmoulé ou l'empreinte de surmoulage de l'une des matières thermoplastiques constituant le manche de manoeuvre 10 surmoulé ; ces deux empreintes 8 et 10 communiquent au niveau du plan de joint 9 par au moins un canal 11 et une ouverture de faible section 12 ; il est évident qu'il peut y avoir plusieurs manches de manoeuvre 5 surmoulés d'outils à main 1 solidaires d'un même plateau présentoir 2 de manière à présenter, par exemple, sur le même support une gamme d'outils à main complémentaires les uns avec les autres. La partie métallique de chaque outil à main, constituant un premier insert 13, est introduite dans l'empreinte du manche de manoeuvre 10 correspondante soit manuellement soit par l'intermédiaire d'un robot ou d'un automate ; dans le cas de la pose automatique du ou des premiers inserts 13, il est intéressant de poser aussi les étiquettes dans l'empreinte du plateau présentoir 8 où elles sont maintenues en place, par exemple, par l'intermédiaire de pastilles métalliques frittées 14, intégrées dans l'empreinte et reliées à un dispositif d'aspiration ; dans le cas de la pose manuelle du ou des premiers inserts 13, les étiquettes peuvent être posées en temps masqué par la personne chargée de poser les premiers inserts 13 dans les empreintes. Si le manche de manoeuvre 5 surmoulé comporte plusieurs matières thermoplastiques, le premier insert est, par exemple, placé dans une première empreinte pour un premier surmoulage, avec une première matière thermoplastique, qui permet d'ancrer le premier insert dans le manche de manoeuvre surmoulé ; l'ensemble constitué du premier insert et du premier surmoulage est placé dans une deuxième empreinte pour réaliser le deuxième surmoulage avec, par exemple, une deuxième matière thermoplastique ; le plateau présentoir est fabriqué au cours de l'une des opérations de surmoulage avec celle des deux matières thermoplastiques qui est la plus appropriée pour faire le plateau présentoir.

Dans une deuxième version de l'invention, le plateau présentoir 2 (fig.1) est, par exemple, moulé par injection dans une matière thermoplastique différente de celle utilisée pour le surmoulage du manche de manoeuvre 5 : lorsque le manche de manoeuvre 5 surmoulé est constitué d'une seule matière thermoplastique surmoulée en une opération, le plateau présentoir 2 constitue un deuxième insert 15 (fig.3 et 4) qui est placé dans un logement approprié de l'empreinte de surmoulage conjointement avec la pose du ou des premiers inserts 16 : le deuxième insert 15 comporte des moyens d'accrochage qui débordent dans des cavités 18 du plan de joint 19 reliées à l'empreinte de surmoulage du manche de manoeuvre 20 par une ouverture 21 de faible section ; ces moyens d'accrochage 17 sont, par exemple, constitués des premières excroissances 17 situées sur la partie du deuxième insert 15, débordant dans les cavités 18, en surépaisseur de part et d'autre du plateau présentoir ; lors du surmoulage du premier insert la matière thermoplastique remplit l'empreinte de surmoulage du manche de manoeuvre 20 puis pénètre par l'ouverture 21 de faible section dans les cavités 18 pour constituer des deuxièmes excroissances 22 venant se surmouler sur les premières excroissances 17 et solidariser ainsi le deuxième insert 15 constituant le plateau présentoir surmoulé avec le manche de manoeuvre 23 surmoulé. Lorsque le manche de manoeuvre 23 surmoulé est constitué de plusieurs matières le deuxième insert peut être solidarisé au manche de manoeuvre surmoulé de la même manière que celle décrite précédemment, soit au cours du premier surmoulage soit au cours du deuxième surmoulage en fonction de la matière la plus appropriée. Le plateau présentoir peut être réalisé dans un autre matériau tel que du carton ou de la plaque de matière plastique découpée tout en restant du domaine de l'invention.

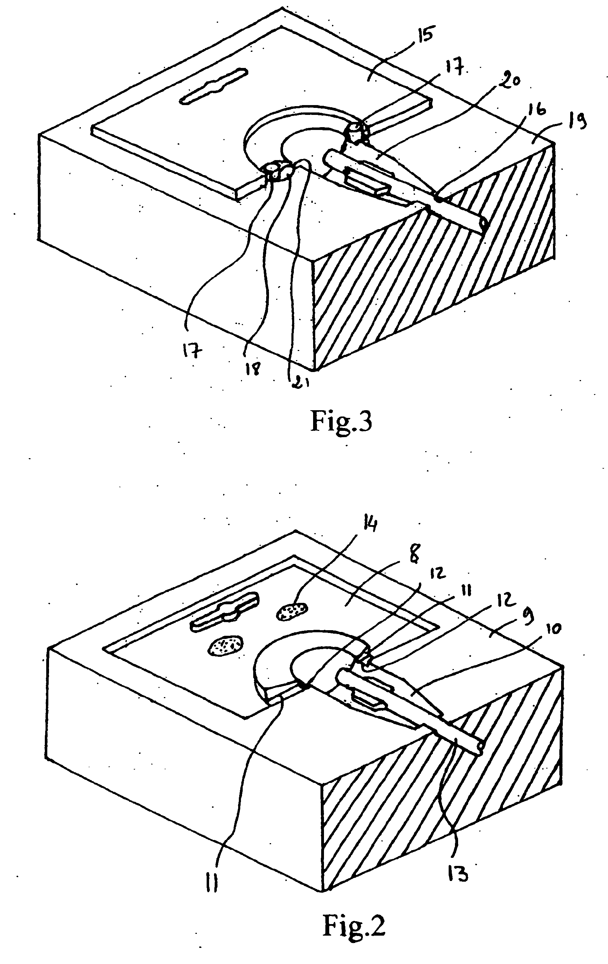

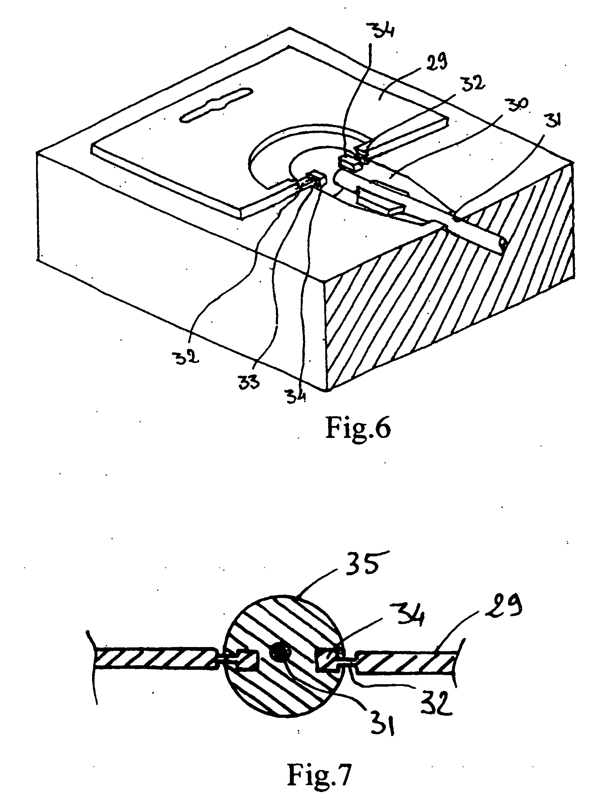

Dans une variante de la deuxième version dé l'invention, lorsque le manche de manoeuvre (fig.1) surmoulé est constitué d'une seule matière thermoplastique surmoulée en une opération, le plateau présentoir 2 constitue un troisième insert 29 (fig.6) qui est placé dans l'empreinte de surmoulage 30 conjointement avec la pose du ou des premiers inserts 31 ; le troisième insert 29 comporte des moyens d'accrochage 32 qui débordent dans l'empreinte de surmoulage 30 du manche de manoeuvre par une ouverture de faible section 33 ; ces moyens d'accrochage 32 sont, par exemple, constitués des troisièmes excroissances 34 (fig.7) situées sur la partie du troisième insert 29, débordant dans l'empreinte de surmoulage 30, en surépaisseur de part et d'autre du plateau présentoir ; lors du surmoulage du premier insert 31, la matière thermoplastique remplit l'empreinte de surmoulage 30 du manche de manoeuvre 35 venant se surmouler sur les troisièmes excroissances 34 et solidariser ainsi le troisième insert 29 surmoulé dans le manche de manoeuvre 35.

Lorsque le manche de manoeuvre surmoulé est constitué de plusieurs matières le troisième insert peut être solidarisé au manche de manoeuvre surmoulé de la même manière que celle décrite précédemment, soit au cours du premier surmoulage soit au cours du deuxième surmoulage en fonction de la matière la plus appropriée. Le plateau présentoir peut être réalisé dans un autre matériau tel que du carton ou de la plaque de matière plastique découpée tout en restant du domaine de l'invention.

Le procédé s'applique de la même façon dans le cas où le manche de manoeuvre surmoulé serait en deux parties distinctes, comme, par exemple, les deux branches d'une pince à prises multiples.

Dans un perfectionnement du procédé le plateau présentoir 2 (fig.1) comporte des moyens de fixation de ce dernier sur une paroi verticale comme, par exemple, des perçages 24, susceptibles de recevoir des vis de fixation ainsi que des moyens de support adaptés à l'outillage à main pour le ranger lorsqu'il a été détaché du plateau présentoir comme, par exemple, un anneau 25, solidaire du plateau présentoir 2, placé horizontalement et d'une section telle que la tige 26 constituant la première partie active du tournevis puisse le traverser mais pas le manche de manoeuvre 5 qui vient en butée dessus; pour d'autres outillages l'anneau est remplacé par un crochet 27 (fig.1 et 5) sur lequel vient s'accrocher une retenue 28 pratiquée dans le manche de manoeuvre 5.

## Revendications

1. Procédé pour l'obtention d'un ensemble de présentation (6) constitué d'au moins un outil à main (1) composé d'un élément métallique comportant une première partie active (26) et une deuxième partie de liaison avec un manche de manoeuvre (5,23,35) solidaire d'un plateau présentoir (2), constitué par surmoulage avec au moins une matière thermoplastique d'un premier insert (13,16,30) pour obtenir un manche de manoeuvre 5 et par moulage simultané du plateau présentoir (2) avec l'une desdites matières thermoplastiques ou par surmoulage partiel d'un deuxième ou troisième insert (15 ou 29), constituant le plateau présentoir (2), ledit plateau (2) comportant notamment des équipements (3) nécessaires à sa présentation dans les rayons des principaux circuits de distribution et des moyens de rangement (24,25,27), l'outil à main (1) étant susceptible d'être séparé du plateau présentoir (2) par découpe, au niveau de points d'attaches (7), de la matière thermoplastique reliant le manche de manoeuvre (5) au plateau présentoir (2).

2. Procédé selon la revendication 1, dans lequel l'empreinte de moulage du plateau présentoir (8) a le même plan de joint (9) de moule que l'empreinte de surmoulage du manche de manoeuvre (10) surmoulé ou que l'empreinte de surmoulage de l'une des matières thermoplastiques constituant le manche de manoeuvre (10) surmoulé, ces deux empreintes (8,10) communiquant au niveau du plan de joint (9) par au moins un canal (11) et une ouverture de faible section (12).

3. Procédé selon les revendications 1 et 2, dans lequel lorsque le manche de manoeuvre (5) surmoulé comporte plusieurs matières thermoplastiques, le premier insert est placé dans une première empreinte pour un premier surmoulage, avec une première matière thermoplastique, qui permet d'ancrer le premier insert dans le manche de manoeuvre surmoulé, l'ensemble constitué du premier insert et du premier surmoulage étant ensuite placé dans une deuxième empreinte pour réaliser le deuxième surmoulage avec une deuxième matière thermoplastique, le plateau présentoir étant fabriqué au cours de l'une des opérations de surmoulage avec celle des deux matières thermoplastiques qui est la plus appropriée.

4. Procédé selon la revendication 1, dans lequel le plateau présentoir (2) est dans un matériau différent de celui utilisé pour le surmoulage du manche de manoeuvre (5), qui est découpé ou qui est moulé par injection, le plateau présentoir (2) constituant un deuxième insert (15) qui est placé dans un logement approprié de l'empreinte de surmoulage d'un moule présentant un plan de joint (19), conjointement avec la pose du ou des premiers inserts (16), comportant des premières excroissances (17) constituant des moyens d'accrochage et qui débordent dans des cavités (18) du plan de joint (19) reliées à l'empreinte de surmoulage du manche de manoeuvre (20) par une ouverture (21) de faible section de manière que, lors du surmoulage du premier insert, la matière thermoplastique remplisse l'empreinte de surmoulage du manche de manoeuvre (20) puis pénètre par l'ouverture (21) dans les cavités (18) pour constituer des deuxièmes excroissances (22) venant se surmouler sur les premières excroissances (17) et solidariser ainsi le deuxième insert (15) constituant le plateau présentoir (2) avec le manche de manoeuvre (23).

5. Procédé selon la revendication 1, dans lequel le plateau présentoir (2) constitue un troisième insert (29) qui est placé dans l'empreinte de surmoulage (30) conjointement avec la pose du ou des premiers inserts (31), le troisième insert (29) comportant des troisièmes excroissances (34) constituant des moyens d'accrochage et qui débordent dans l'empreinte de surmoulage (30) du manche de manoeuvre (35) par une ouverture de faible section (33) de manière que, lors du surmoulage du premier insert (31), la matière thermoplastique remplisse l'empreinte de surmoulage (30) et vienne se surmouler sur les troisièmes excroissances (34) et solidariser ainsi le troisième insert (29) avec le manche de manoeuvre (35).

## Claims

1. Method of obtaining a display assembly (6) consisting of at least one hand tool (1) made up of a metal element comprising a first active part (26) and a second part that joins it to an operating sleeve (5, 23, 35) solidly attached to a tray (2) consisting, by overmoulding with at least one thermoplastic material, of a first insert (13, 16, 30) for obtaining an operating sleeve 5 and by simultaneous moulding of the tray (2) with one of said thermoplastic materials or by partial overmoulding of a second or third insert (15 or 29) that forms the tray (2), said tray (2) including, in particular, equipment (3) required for it to be displayed on the shelves of the main distribution circuits and storage means (24, 25, 27), in which the hand tool (1) can be detached from the tray (2) by cutting, at the level of the points of attachment (7), of the thermoplastic material that connects the operating sleeve (5) to the tray (2).

2. Method according to claim 1, in which the moulding cavity of the tray (8) has the same mould sealing surface (9) as the overmoulding cavity of the overmoulded operating sleeve (10) or as the overmoulding cavity of any of the thermoplastic materials that make up the overmoulded operating sleeve (10), these two cavities (8, 10) adjoining at the level of the sealing surface (9) by means of at least one channel (11) and an opening with a small cross-section (12).

3. Method according to claims 1 and 2, in which the overmoulded operating sleeve (5) includes several thermoplastic materials, the first insert is placed in a first cavity for a first overmoulding with a first thermoplastic material, which allows the first insert to be anchored in the overmoulded operating sleeve, the assembly consisting of the first insert and the first overmoulding then being placed in a second cavity in order to perform the second overmoulding with a second thermoplastic material, the tray being manufactured during one of the overmoulding operations using whichever of the two thermoplastic materials is most suitable.

4. Method according to claim 1, in which the tray (2) is made from a different material to the one used for overmoulding the operating sleeve (5), which is cut or moulded by injection, the tray (2) constituting a second insert (15) which is placed in a suitable housing of the overmoulding cavity of a mould with a sealing surface (19) at the same time as the first insert or inserts (16) are placed, comprising a first series of bumps (17) which constitute hooking means and which enter the cavities (18) of the sealing surface (19) linked to the overmoulding cavity of the operating sleeve (20) through an opening (21) with a small cross-section so that, when overmoulding the first insert, the thermoplastic material fills the overmoulding cavity of the operating sleeve (20) and then penetrates through the opening (21) of the cavities (18) so as to constitute a second series of bumps (22) that are overmoulded on the first series of bumps (17) and thus to solidly attach the second insert (15) that constitutes the tray (2) with the operating sleeve (23).

5. Method according to claim 1, in which the tray (2) constitutes a third insert (29) which is placed in the overmoulding cavity (30) at the same time as the first insert or inserts (31), the third insert (29) comprising a third series of bumps (34) that constitute hooking means and which enter the overmoulding cavity (30) of the operating sleeve (35) through an opening with a small cross-section (33) such that, when overmoulding the first insert (31), the thermoplastic material fills the overmoulding cavity (30) and is moulded over the third series of bumps (34) and the third insert (29) is thus solidly attached to the operating sleeve (35).

## Patentansprüche

1. Herstellungsverfahren einer Präsentationseinheit (6) bestehend aus mindestens einem Handwerkzeug (1) zusammengesetzt aus einem Metallelement mit einem ersten aktiven Teil (26) und einem zweiten Verbindungsteil mit einer Handhabe (5, 23, 35), die fest mit einer Präsentationsplatte (2) verbunden ist, hergestellt durch Abformen mit mindestens einem thermoplastischen Werkstoff eines ersten Einsatzes (13, 16, 30), um eine Handhabe 5 zu erhalten und durch gleichzeitiges Formen der Präsentationsplatte (2) mit einem der besagten thermoplastischen Werkstoffe oder durch teilweises Abformen eines zweiten oder dritten Einsatzes (15 oder 29), der die Präsentationsplatte (2) bildet, wobei die Platte (2) insbesondere die für ihre Präsentation in den Regalen der wichtigsten Vertriebskreise erforderlichen Ausrüstungen sowie Staumittel (24, 25, 27) umfasst, wobei das Handwerkzeug (1) durch Stanzen von der Präsentationsplatte (2) getrennt werden kann, und zwar an Verbindungspunkten (7) des die Handhabe (5) mit der Präsentationsplatte (2) verbindenden thermoplastischen Werkstoffs.

2. Verfahren nach Anspruch 1, bei dem der Formabdruck der Präsentationsplatte (8) die gleiche Formteilungsebene (9) hat wie der Abformungsabdruck der abgeformten Handhabe (10) oder wie der Abformungsabdruck einer der die abgeformte Handhabe (10) bildenden thermoplastischen Werkstoffe, wobei diese beiden Abdrücke (8, 10) im Bereich der Teilungsebene mit mindestens einem Kanal (11) und mit einer Öffnung von kleinem Querschnitt (12) in Verbindung stehen.

3. Verfahren nach den Ansprüchen 1 und 2, bei dem, wenn die abgeformte Handhabe (5) mehrere thermoplastische Werkstoffe umfasst, der erste Einsatz in einen ersten Abdruck für ein erstes Abformen mit einem ersten thermoplastischen Werkstoff eingesetzt ist, der eine Verankerung des ersten Einsatzes in der abgeformten Handhabe ermöglicht, wobei die aus dem ersten Einsatz und der ersten Abformung bestehende Einheit dann in einen zweiten Abdruck eingesetzt wird, um die zweite Abformung mit einem zweiten thermoplastischen Werkstoff herzustellen, wobei die Präsentationsplatte während einem der Abformungsvorgänge mit demjenigen der thermoplastischen Werkstoffe hergestellt wird, der am besten geeignet ist.

4. Verfahren nach Anspruch. 1, bei dem die Präsentationsplatte (2) aus einem anderen Material besteht, als dasjenige, das für das Abformen der Handhabe (5) verwendet wird, die durch Stanzen oder Spritzgießen hergestellt wird, wobei die Präsentationsplatte (2) einen zweiten Einsatz (15) bildet, der in eine geeignete Aufnahme des Abformungsabdrucks einer Form eingesetzt wird, die gemeinsam mit der Anbringung des oder der ersten Einsätze (16) eine Teilungsebene aufweist, umfassend erste Protuberanzen (17), die Einhakmittel bilden und aus Hohlräumen (18) der Teilungsebene (19) herausragen, die mit dem Abformungsabdruck der Handhabe (20) über eine Öffnung (21) mit kleinem Querschnitt verbunden sind, so dass der thermoplastische Werkstoff bei der Abformung des ersten Einsatzes den Abformungsabdruck der Handhabe (20) füllt und dann durch die Öffnung (21) in die Hohlräume (18) eindringt, um zweite Protuberanzen (22) zu bilden, die sich auf den ersten Protuberanzen (17) abformen, und damit den die Präsentationsplatte (2) bildenden zweiten Einsatz (15) mit der Handhabe (23) zu verbinden.

5. Verfahren nach Anspruch 1, bei dem die Präsentationsplatte (2) einen dritten Einsatz (29) bildet, der gemeinsam mit der Anbringung des oder der ersten Einsätze (31) in den Abformungsabdruck (30) eingesetzt wird, wobei der dritte Einsatz (29) dritte Protuberanzen (34) aufweist, die Einhakmittel bilden und aus dem Abformungsabdruck (30) der Handhabe (35) durch eine Öffnung (33) mit kleinem Querschnitt herausragen, so dass der thermoplastische Werkstoff bei dem Abformen des ersten Einsatzes (31) den Abformungsabdruck (30) füllt und sich auf den dritten Protuberanzen (34) abformt und damit den dritten Einsatz (29) mit der Handhabe (35) verbindet.
